# EUROPEAN PATENT SPECIFICATION

(11) **EP 1 484 214 B1**
(45) Date of publication and mention of the grant of the patent: **07.12.2005**
(21) Application number: 03380135.8
(22) Date of filing: 05.06.2003
(51) Int. Cl.: B60M 1/30

(54) **Profile for supporting the contact wire in a rigid overhead railway electrification system**
Profilschiene für die Halterung des Fahrdrahts der starren Oberleitung einer elektrifzierten Eisenbahn
Rail profilé supportant le fil de contact d'une caténaire rigide pour chemins de fer électrifiés

(43) Date of publication of application: 08.12.2004
(73) Proprietor: Metro de Madrid, S.A., 28007 Madrid (ES)
(72) Inventor: Melis Maynar, Manuel, ES-28007 Madrid (ES); De Matias Jiménez, Ildefonso, ES-28007 Madrid (ES); Gonzàlez Fernàndez,Francisco Javier, ES-28007 Madrid (ES); Vadillo Vallejo, Jesus, ES-28007 Madrid (ES); Royuela Modron, Rafael, ES-28007 Madrid (ES); Centellas Garcia, Isaac, ES-28007 Madrid (ES); Blanquer Jaraiz, Jorge Francisco, ES-28007 Madrid (ES); Vera Alvarez, Carlos Jesus, ES-28224 Madrid (ES); Suàrez Esteban, Berta, ES-28100 Alcobendas Madrid (ES); Paulin Jennifer, ES-28008 Madrid (ES); Rodriguez Miranda, Pablo, ES-28011 Madrid (ES)
(74) Representative: Carpintero Lopez, Francisco

(56) References cited:
- FR-A- 2 185 838
- US-A- 2 207 860
- US-A- 3 985 211
- HEROULT J C: "LA CATENAIRE RIGIDE" REVUE GENERALE DES CHEMINS DE FER, CENTRALE DES REVUES DUNOD-GAUTHIER-VILLARS. PARIS, FR, no. 9, 1 September 1992 (1992-09-01), pages 43-52, XP000307274 ISSN: 0035-3183

## Description

### FIELD OF THE INVENTION

The invention is comprised within the field of electric current collection systems for railway traction and, especially, in the field of electric current collection systems by means of an "overhead third rail" or "rigid catenary".

### BACKGROUND OF THE INVENTION

Among the different electric current collection systems for railway traction, it is worth mentioning collection by means of the traditional third rail, by the overhead third rail, by tramway suspension and by flexible overhead contact line or catenary.

The main features of the traditional third rail collection system are its simplicity, robustness and easy maintenance, although there is the risk that accidental contacts with the electrified rail occur, since the rail is normally located in easily accessible areas. This fact prevents its application with high voltages, thus limiting the supplied power, making it unsuitable for high traveling speeds. This feature justifies the fact that this system, which was used at the start of railway electrifications, has experienced an broad spread in metropolitan railways, whose route forces traveling at speeds lower than those corresponding to other railway lines.

The overhead third rail collection system, also known as rigid catenary, has the same advantages as the previous one, although its elevated height over the track reduces the risks of accidental contact, permitting the use of higher voltages. Another advantage of this system in comparison with other overhead collection systems is its low demand with regard to the height required for its assembly, making it especially suitable for its use in tunnels. This feature has favored its application mainly in metropolitan railways.

Lastly, the overhead flexible contact line collection system, normally denominated with the term catenary, permits better dynamic performance of the catenary - pantograph system, even at very high speeds (above 350 km/h). This is basically due to its higher degree of uniformity, as well as its greater complexity, which permits acting on different factors for the purpose of optimizing overall system performance. Offsetting that, this type of overhead line requires greater assembly and maintenance effort, as well as a significantly higher maintenance cost, as it has a large number of constituent elements. Another drawback of this system is its greater demand with regard to the height necessary for assembly thereof, making it less suitable than the previous ones for its assembly in tunnels with tight clearance gauges.

The origin of the electric feed system by means of an overhead third rail, also known as rigid catenary, came about as a safer alternative to the traditional third rail, preventing accessibility to the electrified line by raising it to a significant height over the track, thus preventing a large number of accidents.

Following this criteria, a similar system was assembled in the Baltimore (United States) railways in 1890, and in the Budapest (Hungary) subway in 1896.

These first overhead rails were manufactured with steel, just like their predecessors, which implied a serious drawback when suspending them from the ceiling since their high weight forced reinforcing the supports and made the assembly process difficult. Likewise, the easy corrosion typical of this material was detrimental to the current collection process.

To overcome this difficulty, two alternatives came about: one consisted of the use of a reduced steel section covered by copper strips, which was used in the Sapporo (Japan) subway, and another one, used in the Hannover subway in about 1934, in which a self-supporting conductor rail manufactured in copper was assembled, although the heavy weight of this material combined with its high cost continued to imply a large drawback.

In 1961, the Tokyo subway adopted a new solution using an aluminum rail, much lighter and more economical than copper, and with excellent conducting capacity, much better than that of steel. Furthermore, for the purpose of reducing the high friction that aluminum has in contact with the pantograph, and which would lead to an unwanted wear increase, a copper conductor cable was placed on the lower part of the rail.

Systems based on this configuration are disclosed, for example, in published patent application numbers FR-A-2,806,358, US-A-5,957,254 and EP-A-593,350.

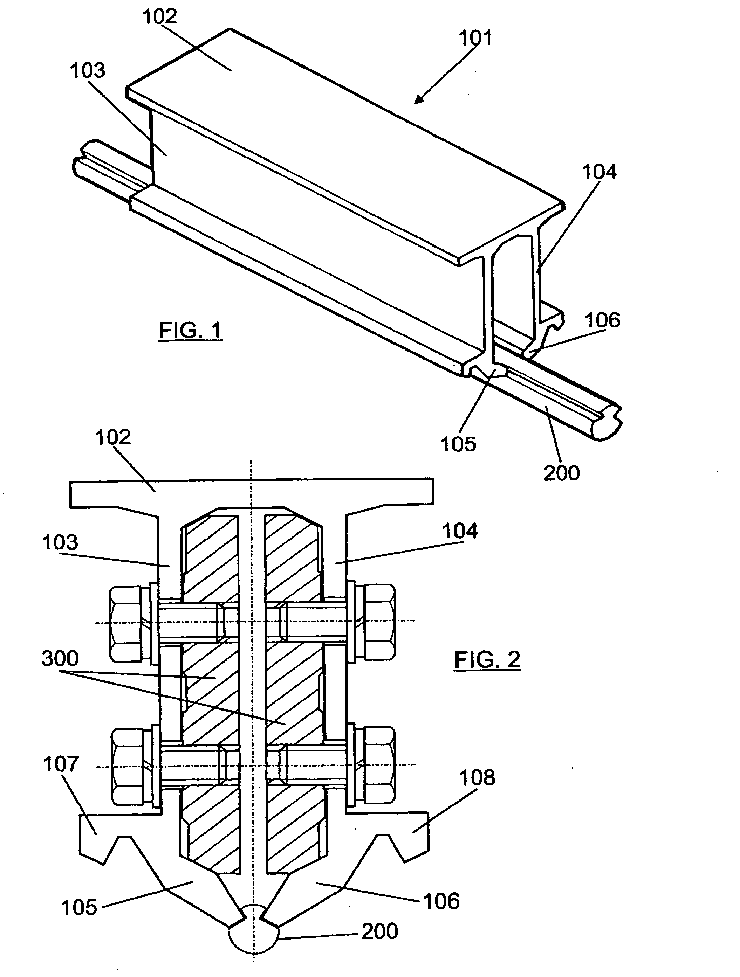

The rigid catenaries disclosed in these documents are basically constituted of a hollow rail constituted of an extruded aluminum profile normally having a pentagonal section which provides a good rigidity/weight ratio. A known profile of this type is shown in figure 1. This profile 101 has an upper base 102 serving so as to couple the profile to a support fixed, for example, on a tunnel ceiling. Two substantially straight legs 103, 104 whose lower ends have respective inclined spans 105, 106, vertically extend, starting from said base, between which lower ends there is a space or opening in which the conductor wire or contact wire 200 is housed; the lower ends of the legs perform clip or gripping device functions for the purpose of holding the contact wire 200, normally manufactured of copper, whose section is normally circular or oval-shaped, and which has two side notches in which the corresponding lower ends of the legs are fitted.

In order to prevent galvanic pile formation between the aluminum and copper, the contact wire is coated with a layer of oil and a series of drill-holes are made on the lower part of the aluminum profile which permit evacuating the water that could condense on the inside thereof, and which could come to act as an electrolytic means favoring ion conduction.

The profile shown in figure 1 also includes, in the area of the lower part of each leg, respective outer horizontal projections 107, 108 which serve as a rail and gripping means for the machine or carriage used for introducing the contact wire 200 into the opening by means of plastic deformation of the rail.

The aluminum bars or profiles, normally having lengths comprised between 5 and 12 m, are assembled together by means of screwed-on flanges 300 housed inside of the profile, as schematically shown in figure 2, forming spans with a longer length (for example up to 500 m).

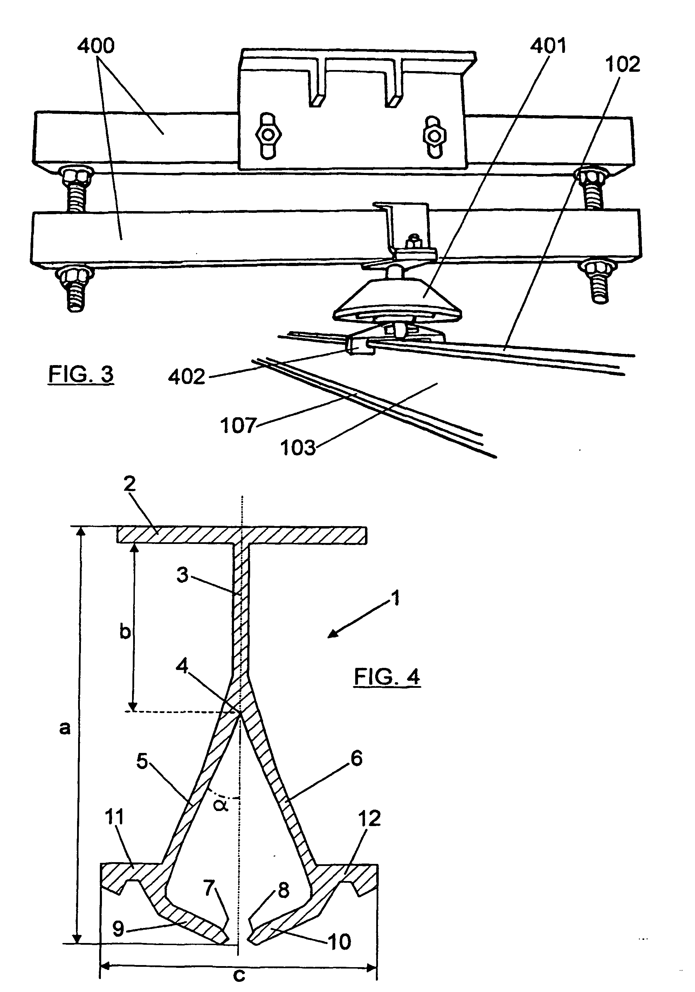

In turn, each one of these conductor rails is suspended from the tunnel arch by means of a support. These supports, schematically shown in figure 3, are formed by rolled steel profiles 400 with screwed-on couplings which permit regulating their vertical and lateral position in order to ensure their correct positioning with regard to the track axis, and an electric insulator 401 which ends in a bronze clamp 402 in which the upper base 102 of the aluminum profile is housed, and which is coated in a low friction coefficient material so as to permit the longitudinal shifting that the rail could have as a consequence of thermal expansions.

These supports also fulfill the aim of providing the conductor rail with a sinusoidal shape on the horizontal plane, with the object of reducing the localized wear of the pantograph collector shoes, which is thus uniformly distributed along the entire width thereof. This effect, called off-centering, is achieved laterally and alternately separating the supports with regard to the track axis at a distance of no more than, for example, 20 cm., thereby achieving bending the rail during the assembly process. Likewise, the rail can be bent to be adapted to the curved routs of the track with radii typically greater than 120 m (for smaller radii, a mechanical bending is normally needed which can be carried out in factory).

The main advantages offered by the "rigid catenary" system in comparison to other aforementioned systems (traditionally third rail and flexible catenary) are the following:
- The simplicity of the supports required for suspension of the rigid catenary facilitates the assembly and maintenance process.
- The absence of mechanical tension applied on the contact wire significantly reduces the size of the critical section of the conductor cable against breaking stresses, which increases the replacement period due to wear, this being marked by the risk of the pantograph attacking the aluminum profile.
- As a consequence of the absence of a support wire, as well as for the simplicity of the suspension supports, the minimum height required for fixing of the rail is fairly reduced, which decreases the tunnel height demands, with the subsequent lower cost of the civil work. For the same reason, this system is especially suitable for electrification of reduced clearance tunnels.
- The equivalent large copper section permits the circulation of large intensities of current, which prevents the need to use an accompanying feeder, in addition to permitting the use of low voltages for high power transmission.
- Likewise, the large surface provided by the rail in contact with the air favors the cooling of the system, which reduces the risks of melting due to overheating originated as a consequence of the occurrence of electric intensity peaks.

In spite of its numerous advantages, the degree of use of this electric current collection system is relatively low. This is basically because of the drawbacks mentioned below:
- The absence of mechanical stress of the contact wire, apart from the aforementioned advantages, also provides a drawback derived from the fact that the maximum vertical deflection (deviation in a vertical direction) permitted for achieving a suitable current collection cannot exceed 0.1% of the distance between supports, which forces placing the supports at distances of no more than approximately 12 m. This fact makes the use of this system outside of tunnels difficult since the required number of posts would be too high and, at times, prohibitory, from an economical as well as environmental point of view. In the case of tunnel assemblies, this factor is irrelevant since the direct fixing on the tunnel arch permits doing away with the posts, while at the same time providing the possibility of using very simple supports, with the subsequent cost reduction.
- The high cost of the non-ferrous materials used (aluminum and copper), although it can be justified by the greater electric current circulation capacity.
- Low traveling speeds, the most conventional speeds being around 70 or 80 km/h, and exceptionally 110 km/h, a reason for which its largest field of use has been metropolitan railways, whose routes normally require rather low traveling speeds in comparison to other railway lines.

The limitation with regard to the speeds is due to a poor dynamic performance of this type of catenary. The traveling of the train makes the contact between pantograph and catenary an oscillating force. This force will be characterized by two parameters, namely, the mean force and the standard deviation of force; the combination of these two parameters defines the electric collection quality, commonly called "dynamic performance". The ideal case would be that the standard deviation of contact force between the pantograph and catenary were zero, i.e., that the contact force were constant. However, this is only viable when the train is stopped; when the train moves, both mechanical systems (pantograph and catenary) dynamically interact, such that the standard deviation value will depend on the traveling speed and on the mechanical nature of said systems (mass, rigidity and damping).

The distance between the catenary supports directly affects the rigidity of the catenary system, whereas the remaining parameters are set for a determined catenary type. Since the collection quality worsens at higher traveling speed (since the standard deviation of contact force increases, and at high speeds, separations between the contact wire and the pantograph occur), for a specific assembly (with a determined catenary profile and a determined distance between supports) and with minimum electric collection quality requirements, trains cannot circulate at speeds exceeding a threshold determined by the factors mentioned. In order to travel at higher speeds, the distance between supports could be reduced, which, however, would imply significant costs.

As a result, a way of improving the dynamic performance of the catenary has been sought which does not depend on a reduction of distance between supports.

### DESCRIPTION OF THE INVENTION

When planning a new rigid catenary design, the conventional system shown in figure 1 was the starting ground, and the possibilities of modifying it for the purpose of improving the dynamic performance of the catenary-pantograph assembly was studied for the purpose of permitting travel at higher speeds without having to use an excessive number of supports.

After exhaustive studies, the choice was made to focus on the development of a new profile permitting using the conventional contact wires (also called conductor wires), for example those which are used in the system in figure 1, in order to prevent excessive cost that using wires specifically designed for the new collection system would imply. Furthermore, it was considered suitable to design a profile which permits coupling the contact wire by means of elastic deformation of the profile since it is a very simple system with a quick assembly or replacement of the contact wire.

It has been shown that there are a series of factors which may favorably influence the dynamic performance of the catenary. Among these factors are: the increase of the elastic module of the profile; the decrease of the linear mass distribution of the profile; and the increase of the area moment of inertia of the profile cross section with regard to the horizontal axis, I_{HOR}.

There are basically two ways to increase this moment of inertia:
- Increasing the profile linear mass; and
- Increasing the vertical distance separating each differential mass element of the centroid of the profile cross section.

The first option was not considered the most suitable option.

With regard to the second option, i.e., the increase of the vertical distance separating each differential mass element of the centroid of the profile cross section, it can be concluded that a suitable profile type would be an I profile, which would permit using the greatest moment of inertia possible, as almost the entire mass is concentrated in the upper and lower areas, and whose flexure performance is optimal. However, the conductor rail, in practice, must be formed by two clearly different elements: the contact wire and the profile holding said contact wire. A simple "I" profile would not permit coupling the conductor wire by means of plastic deformation, in line with that previously mentioned.

As a consequence, the possibilities of finding a profile were studied whose cross section, apart from increasing the moment of inertia I_{HOR} with regard to conventional profiles, at the same time respects certain design conditions, namely:
- Permitting substantially maintaining the cross section area since an increase thereof would be associated with an increase of the conductor rail mass, which would be a negative effect, whereas a decrease would reduce the area through which the electric current can circulate, with the corresponding overheating.
- Permitting not significantly decreasing the perimeter of the cross section in order to not reduce the heat dissipation area.
- Permitting not exceeding a certain profile height (due to limits imposed by the clearance available in the upper area of the tunnel in which the new rigid catenary would be assembled).
- Likewise, a too narrow section could cause instability problems (bulging) of the central area.
- A minimum inclination in the lower area of the profile (clip) would also have to be respected, such that the possible effect of assembly misalignments together with the rocking movement of the passenger car and, therefore, of the pantograph, does not produce contacts of the pantograph with the profile, which could lead to a wear of this type of element whose assembly, unlike the contact wire, is considered permanent.
- It is desirable for the profile to include elements which permit the opening of the profile by means of an assembly carriage, in order to make the insertion of the contact wire possible.
- The profile must comprise elements (for example an upper base) which permit suspending the rail from the corresponding supports fixed to the tunnel ceiling or posts.

The invention refers to a profile for supporting at least one contact wire in an overhead railway electrification system, said profile being constituted of an electric conductor element (which can be of metal, for example, of aluminum, for example of extruded aluminum; alternatively, the conductor element can be composed of a plurality of elements of different materials, for example, polyester with carbon fibers, etc.; some of these materials can be electric conductors and others are not; the choice of materials can be made for the purpose of achieving an optimal ratio between resistance, flexibility, conductivity, cost, etc.) extending in a longitudinal direction which, when the profile is assembled, substantially corresponds to the direction of the track (with the exception of the lateral deviations necessary for obtaining the sinusoidal configuration on the horizontal plane, switch point deviations, etc.).

The profile of the invention comprises, like the conventional profile shown in figure 1, support means of at least one contact wire, and it has a cross section:
- extending in a first direction (which basically corresponds to the vertical direction when the profile is assembled in the electrification system) between a first end corresponding to an upper base of the assembled profile, and a second end corresponding to the support means, the distance between the first end and the second end corresponding to the height of the assembled profile; and
- having, at said first end, a base extending in a direction substantially perpendicular to said first direction and corresponding to the upper base of the assembled profile.

According to the invention, the cross section furthermore has a first central span extending from said base, in said first direction and towards the second end, to a bifurcation point where said first central span divides into at least two second separated spans extending from said bifurcation point to said second end where each one of the second spans has a free end, said free ends constituting the support means of the contact wire or contact wires.

In other words, instead of the general reverse "U" shape shown in figure 1, the invention starts from a basic reverse "Y"-shaped configuration. This allows increasing the moment of inertia I_{HOR} according to that commented above, but substantially maintaining other important system features, such as the possibility of introduction of the wire by means of elastic deformation of the second spans or "legs"/"arms" of the "Y".

Starting from this basic configuration, the different parameters can be modified according to sizes (for example, profile "height") and materials chosen, for the purpose of obtaining optimal performance.

For example, the first central span can have a length in the first direction (i.e., a "height" if considering the assembled profile) corresponding to between 15% and 90% of the distance between the first end and second end. It may be preferable for said length to correspond to between 25% and 70% of the distance between the first end and second end, more preferable for it to correspond to between 30% and 60% of the distance between the first end and the second end, for example, to between 35% and 50% or 38% and 45% of the distance between the first end and second end. For example, for an aluminum profile with a "height" (distance between the first and second end) of approximately 150 mm, it may be suitable for the length of the first central span to correspond to between 38% and 45% of the distance between the first end and second end.

Preferably in the profile cross section, each second span, as from the bifurcation point, has a first portion extending at a first acute angle, for example, at an angle comprised between 20° and 80°, with regard to the first direction (giving way to the general "Y" configuration). Said first angle can be chosen according to the features of the material chosen for the profile (resilience, weight, etc.) and according to the profile dimensions. For example, for an aluminum profile with a "height" (distance between the first and second end) of approximately 150 mm, it may be suitable for the angle to be between 20° and 35°.

Each second span may have a second end portion inclined towards the second end and towards a line of symmetry of the cross section (i.e., towards the profile's plane of symmetry).

Two of the second spans may have, each one, a side projecting portion extending in a direction substantially perpendicular to said first direction and which constitute coupling means for a carriage for the insertion of the contact wire in the support means. Each side projecting portion may have a free end, the distance between the free ends of the two side projecting portions corresponding to a maximum profile width. Said maximum width can be, for example, between 9 and 11 cm (this is a suitable value for an aluminum profile, for example, with a height of 150 mm).

In the profile cross section, the base has an extension perpendicular to the first direction whose magnitude can be chosen according to the material and dimensions of the rest of the profile, but which can typically correspond to between 40% and 70% of the magnitude of the distance between the first end and second end of the profile (this value may be suitable for an aluminum profile with a height of about 150 mm).

The base can represent between 15% and 50& of the profile weight, and the first central span can represent between 5% and 20% of the profile weight (these values are suitable for an aluminum profile with a height of about 150 mm).

The distance between the first end and the second end can be chosen according to the features of each case, but a suitable distance (assembled profile height) can be between 10 and 25 cm, preferably between 14 and 16 cm.

The profile can have two second spans and be configured so as to support a contact wire, the free ends of the second spans being configured so as to be introduced into respective notches of the contact wire and for retaining said contact wire like clips.

According to determined features of a facility (costs of materials, distance between supports, needs to reach high speeds, etc.), the average skilled person in the art can choose the most suitable dimensions, materials, angles, etc., in order to obtain an optimal ratio between electric collection quality and facility costs. For example, the average skilled person in the art can resort to simulators to calculate the suitable dimensions starting from the general profile configuration according to the invention.

### BRIEF DESCRIPTION OF THE DRAWINGS

A series of drawings will be very briefly described below which will help to better understand the invention and which are expressly related to an embodiment of said invention, shown as an illustrative and non-limiting example thereof.
Figure 1 shows a perspective schematic view of a profile with contact wire according to the sate of the art.
Figure 2 shows a sectional schematic view of a profile in the coupling area between two profiles according to the state of the art.
Figure 3 shows a schematic view of a profile coupled to a conventional support according to the state of the art.
Figure 4 shows a cross section view of a profile according to a preferred embodiment of the invention.

### DESCRIPTION OF A PREFERRED EMBODIMENT OF THE INVENTION

The profile according to a preferred embodiment of the invention is constituted of an element (preferably of aluminum) extending in a longitudinal direction (basically, once the profile is assembled on the corresponding supports along the train tracks).

As can be seen in figure 4, the profile 1 has a cross section:
- extending in a first direction between a first end corresponding to an upper base of the assembled profile, and a second end corresponding to the support means, the distance (a) between the first end and second end corresponding to the assembled profile height; and
- having, at said first end, a base 2 extending in a direction substantially perpendicular to said first direction and corresponding to the upper base of the assembled profile.

The cross section has a first central span 3 extending from said base 2 in said first direction and towards the second end, to a bifurcation point 4 where said first central span 3 divides into at least two separated second spans 5, 6 which extend from said bifurcation point 4 to said second end where each one of the second spans 5, 6 has a free end 7, 8. These free ends 7, 8 constitute the support means of the contact wire 200.

In this preferred embodiment, the assembled profile "height", i.e. the distance (a) between the first end and second end, is 150 mm.

Figure 4 shows the suitable relative dimensions and configuration for this extruded aluminum profile with a height of 150 mm. In this case, the profile has been configured such that the first central span 3 has a length (b) in the first direction corresponding to approximately 36% of the distance (a) between the first end and second end.

As can be seen in figure 4, in the profile cross section, each second span 5, 6, starting from the bifurcation point 4, has a first portion extending at a first acute angle (α) of approximately 21° with regard to the first direction. Furthermore, each second span 5, 6 has a second end portion 9, 10 inclined towards the second end and towards a line of symmetry of the cross section.

On the other hand, each one of the two second spans 5, 6 is provided with a side projecting portion 11, 12 extending in a direction substantially perpendicular to said first direction and which constitutes coupling means for a carriage for inserting the contact wire 200 into the support means. The distance (c) between the free ends of the two side projecting portions determines the one maximum profile width (c), which in this case is 100 mm.

As seen in figure 4, the base 2 has an extension in a direction perpendicular to the first direction whose magnitude corresponds to approximately 55% of the magnitude of the distance (a) between the first end and second end.

In this preferred embodiment, the base 2 represents approximately 25% and the first central span 3 10% of the profile weight.

As seen in figure 4, in this preferred embodiment of the invention, the profile has two second spans 5, 6 and the free ends 7, 8 of the second spans are configured so as to be introduced in respective notches of the contact wire 200 and to retain said contact wire like clips.

In this preferred embodiment of the invention, designed to be used with conventional conductor wire with a cross section area of 152 mm², the dimensions have been chosen such that the surface area of the profile cross section is 2,118.3 mm².

The materials, size, shape and arrangement of the elements will be susceptible to variation as long as this implies no alteration of the basic concept of the invention.

Throughout the present description and claims, the word "comprises" and variations thereof such as "comprising", do not intend to exclude other steps or components.

## Claims

1. A profile for supporting at least one contact wire in an overhead railway electrification system,
said profile (1) being constituted by an electric conductor element extending in a longitudinal direction,
said profile comprising support means of at least one contact wire (200),
said profile having a cross section
- extending in a first direction between a first end corresponding to an upper base of the assembled profile, and a second end corresponding to the support means, the distance (a) between the first end and second end corresponding to the height of the assembled profile; and
- having, at said first end, a base (2) extending in a direction substantially perpendicular to said first direction and corresponding to the upper base of the assembled profile;
**characterized in that**
said cross section furthermore has a first central span (3) extending from said base (2) in said first direction and towards the second end, to a bifurcation point (4) where said first central span (3) divides into at least two separated second spans (5, 6) which extend from said bifurcation point (4) to said second end where each one of the second spans (5, 6) has a free end (7, 8), said free ends (7, 8) constituting the support means of said at least one contact wire (200).

2. A profile according to claim 1, **characterized in that** in the profile cross section, the first central span (3) has a length (b) in said first direction which corresponds to between 15% and 90% of the distance (a) between the first end and second end.

3. A profile according to claim 2, **characterized in that** said length (b) corresponds to between 25% and 70% of the distance (a) between the first end and second end.

4. A profile according to claim 3, **characterized in that** said length (b) corresponds to between 30% and 60% of the distance (a) between the first end and second end.

5. A profile according to claim 4, **characterized in that** said length (b) corresponds to between 35% and 50% of the distance (a) between the first end and second end.

6. A profile according to claim 5, **characterized in that** said length (b) corresponds to between 38% and 45% of the distance (a) between the first end and second end.

7. A profile according to any of the previous claims, **characterized in that** in the profile cross section, starting from the bifurcation point (4), each second span (5, 6) has a first portion extending in a first acute angle (α) with regard to the first direction.

8. A profile according to claim 7, **characterized in that** said first angle is between 20° and 80°.

9. A profile according to any of claims 7 and 8, **characterized in that** each second span (5, 6) has a second end portion (9, 10) inclined towards the second end and towards a line of symmetry of the cross section.

10. A profile according to any of the previous claims, **characterized in that** each one of two second spans (5, 6) is provided with a side projecting portion (11, 12) extending in a direction substantially perpendicular to said first direction and constituting coupling means for a carriage for insertion of the contact wire (200) into the support means.

11. A profile according to claim 10, **characterized in that** each side projecting portion (11, 12) has a free end, the distance between the free ends of the side projecting portions corresponding to a maximum profile width (c).

12. A profile according to claim 11, **characterized in that** the maximum width (c) is between 9 and 11 cm.

13. A profile according to any of the previous claims, **characterized in that** in the profile cross section, the base (2) has an extension in the direction perpendicular to the first direction whose magnitude corresponds to between 40% and 70% of the magnitude of the distance (a) between the first end and second end.

14. A profile according to any of the previous claims, **characterized in that** the base (2) represents between 15 % and 50 % of the profile weight.

15. A profile according to any of the previous claims, **characterized in that** the first central span (3) represents between 5 % and 20 % of the profile weight.

16. A profile according to any of the previous claims, **characterized in that** the distance (a) between the first end and second end is between 10 and 25 cm.

17. A profile according to claim 16, **characterized in that** the distance (a) between the first end and second end is between 14 and 16 cm.

18. A profile according to any of the previous claims, **characterized in that** it has two second spans (5, 6) and **in that** it is configured so as to support one contact wire (200), the free ends (7, 8) of the second spans (5, 6) being configured so as to be introduced into respective notches of the contact wire and to retain said contact wire like clips.

19. A profile according to any of the previous claims, **characterized in that** the electric conductor element is of metal.

20. A profile according to claim 19, **characterized in that** the metal is aluminum.

21. A profile according to any of claims 1-18, **characterized in that** the conductor element is composed of a plurality of elements of different materials.

## Patentansprüche

1. Profil zum Stützen von wenigstens einem Fahrdraht in einem Hochbahn-Elektrifizierungssystem,
wobei das Profil (1) aus einem elektrischen Leitungselement gebildet wird, das sich in Längsrichtung erstreckt,
wobei das Profil Stützmittel für wenigstens einen Fahrdraht (200) aufweist,
wobei das Profil einen Querschnitt aufweist,
- der sich in einer ersten Richtung zwischen einem ersten Ende, das einer oberen Basis des zusammengebauten Profils entspricht, und einem zweiten Ende erstreckt, das dem Stützmittel entspricht, wobei der Abstand (a) zwischen dem ersten und zweiten Ende der Höhe des zusammengebauten Profils entspricht; und
- der an dem ersten Ende eine Basis (2) aufweist, die sich in einer Richtung erstreckt, die im Wesentlichen senkrecht zu der ersten Richtung ist und der oberen Basis des zusammengebauten Profils entspricht;
**dadurch gekennzeichnet, dass**
der Querschnitt des Weiteren eine erste mittlere Stützweite (3) aufweist, die sich von der Basis (2) in der ersten Richtung und in Richtung auf das zweite Ende zu einem Gabelungspunkt (4) erstreckt, an dem sich die erste mittlere Stützweite (3) in wenigstens zwei getrennte zweite Stützweiten (5, 6) teilt, die sich von dem Gabelungspunkt (4) zu dem zweiten Ende erstrecken, an dem jede der zweiten Stützweiten (5, 6) ein freies Ende (7, 8) aufweist, wobei die freien Enden (7, 8) das Stützmittel von dem wenigstens einen Fahrdraht (200) bilden.

2. Profil nach Anspruch 1, **dadurch gekennzeichnet, dass** in dem Profil-Querschnitt die erste mittlere Stützweite (3) eine Länge (b) in der ersten Richtung aufweist, die zwischen 15% und 90% des Abstands (a) zwischen dem ersten Ende und dem zweiten Ende entspricht.

3. Profil nach Anspruch 2, **dadurch gekennzeichnet, dass** die Länge (b) zwischen 25% und 70% des Abstands (a) zwischen dem ersten Ende und dem zweiten Ende entspricht.

4. Profil nach Anspruch 3, **dadurch gekennzeichnet, dass** die Länge (b) zwischen 30% und 60% des Abstands (a) zwischen dem ersten Ende und dem zweiten Ende entspricht.

5. Profil nach Anspruch 4, **dadurch gekennzeichnet, dass** die Länge (b) zwischen 35% und 50% des Abstands (a) zwischen dem ersten Ende und dem zweiten Ende entspricht.

6. Profil nach Anspruch 5, **dadurch gekennzeichnet, dass** die Länge (b) zwischen 38% und 45% des Abstands (a) zwischen dem ersten Ende und dem zweiten Ende entspricht.

7. Profil nach irgendeinem der vorhergehenden Ansprüche, **dadurch gekennzeichnet, dass** in dem Profil-Querschnitt, ausgehend von dem Gabelungspunkt (4), jede zweite Stützweite (5, 6) einen ersten Abschnitt aufweist, der sich in einem ersten spitzen Winkel ( ) in Bezug auf die erste Richtung erstreckt.

8. Profil nach Anspruch 7, **dadurch gekennzeichnet, dass** der erste Winkel zwischen 20° und 80° beträgt.

9. Profil nach irgendeinem der Ansprüche 7 und 8, **dadurch gekennzeichnet, dass** jede zweite Stützweite (5, 6) einen zweiten Endabschnitt (9, 10) aufweist, der in Richtung auf das zweite Ende und in Richtung einer Symmetrielinie des Querschnitts geneigt ist.

10. Profil nach irgendeinem der vorhergehenden Ansprüche, **dadurch gekennzeichnet, dass** jede eine der zwei zweiten Stützweiten (5, 6) mit einem seitlich vorspringenden Abschnitt (11, 12) versehen ist, der sich in eine Richtung erstreckt, die im Wesentlichen senkrecht zu der ersten Richtung ist und Kopplungsmittel für einen Laufwagen zur Einführung des Fahrdrahts (200) in das Stützmittel bildet.

11. Profil nach Anspruch 10, **dadurch gekennzeichnet, dass** jeder seitlich vorspringende Abschnitt (11, 12) ein freies Ende aufweist, wobei der Abstand zwischen den freien Enden der seitlich vorspringenden Abschnitte einer maximalen Profilbreite (c) entspricht.

12. Profil nach Anspruch 11, **dadurch gekennzeichnet, dass** die maximale Breite (c) zwischen 9 und 11 cm liegt.

13. Profil nach irgendeinem der vorhergehenden Ansprüche, **dadurch gekennzeichnet, dass** in dem Profil-Querschnitt die Basis (2) eine Verlängerung in der Richtung aufweist, die senkrecht zu der ersten Richtung ist, deren Größe zwischen 40% und 70% der Größe des Abstands (a) zwischen dem ersten Ende und zweiten Ende entspricht.

14. Profil nach irgendeinem der vorhergehenden Ansprüche, **dadurch gekennzeichnet, dass** die Basis (2) zwischen 15% und 50% des Profilgewichts aufweist.

15. Profil nach irgendeinem der vorhergehenden Ansprüche, **dadurch gekennzeichnet, dass** die erste mittlere Stützweite (3) zwischen 5% und 20% des Profilgewichts aufweist.

16. Profil nach irgendeinem der vorhergehenden Ansprüche, **dadurch gekennzeichnet, dass** der Abstand (a) zwischen dem ersten Ende und zweiten Ende zwischen 10 und 25 cm beträgt.

17. Profil nach Anspruch 16, **dadurch gekennzeichnet, dass** der Abstand (a) zwischen dem ersten Ende und zweiten Ende zwischen 14 und 16 cm beträgt.

18. Profil nach irgendeinem der vorhergehenden Ansprüche, **dadurch gekennzeichnet, dass** es zwei zweite Stützweiten (5, 6) aufweist und **dadurch**, dass es so ausgelegt ist, dass es einen Fahrdraht (200) stützt, wobei die freien Enden (7, 8) der zweiten Stützweiten (5, 6) so ausgelegt sind, dass sie in entsprechende Einkerbungen für den Fahrdraht eingeführt und den Fahrdraht wie Klemmen festhalten können.

19. Profil nach irgendeinem der vorhergehenden Ansprüche, **dadurch gekennzeichnet, dass** das elektrische Leitungselement aus Metall ist.

20. Profil nach Anspruch 19, **dadurch gekennzeichnet, dass** das Metall Aluminium ist.

21. Profil nach irgendeinem der Ansprüche 1 - 18, **dadurch gekennzeichnet, dass** das Leitungselement sich aus einer Vielzahl von Elementen aus verschiedenen Materialien zusammensetzt.

## Revendications

1. Rail profilé supportant au moins un fil de contact d'une caténaire pour chemins de fer électrifiés,
le rail profilé (1) étant constitué par un élément conducteur électrique s'étendant dans une direction longitudinale,
le rail profilé comprenant des moyens de support d'au moins un fil de contact (200),
le rail profilé présentant une section transversale
- qui s'étend dans une première direction entre une première extrémité correspondant à une partie supérieure du rail profilé assemblé, et une seconde extrémité correspondant aux moyens de support, la distance (a) entre les première et seconde extrémités correspondant à la hauteur du rail profilé assemblé ; et
- qui comprend, à la première extrémité, une partie (2) s'étendant dans une direction essentiellement perpendiculaire à la première direction et correspondant à la partie supérieure du rail profilé assemblé ;
**caractérisé en ce que**
la section transversale comprend en outre une première suspente centrale (3) s'étendant de la partie (2) dans la première direction vers la seconde extrémité, jusqu'à un point de bifurcation (4) où la première suspente centrale (3) se divise en au moins deux secondes suspentes séparées (5, 6) s'étendant à partir du point de bifurcation (4) jusqu'à la seconde extrémité où chacune des secondes suspentes (5, 6) présente une extrémité libre (7, 8), les extrémités libres (7, 8) constituant les moyens de support du fil de contact (200).

2. Rail profilé selon la revendication 1,
**caractérisé en ce que**
dans la section transversale du rail profilé, la première suspente centrale (3) présente une longueur (b) dans la première direction qui correspond à une valeur comprise entre 15 % et 90 % de la distance (a) entre la première extrémité et la seconde extrémité.

3. Rail profilé selon la revendication 2,
**caractérisé en ce que**
la longueur (b) correspond à une valeur comprise entre 25 % et 70 % de la distance (a) entre la première extrémité et la seconde extrémité.

4. Rail profilé selon la revendication 3,
**caractérisé en ce que**
la longueur (b) correspond à une valeur comprise entre 30 % et 60 % de la distance (a) entre la première extrémité et la seconde extrémité.

5. Rail profilé selon la revendication 4,
**caractérisé en ce que**
la longueur (b) correspond à une valeur comprise entre 35 % et 50 % de la distance (a) entre la première extrémité et la seconde extrémité.

6. Rail profilé selon la revendication 5,
**caractérisé en ce que**
la longueur (b) correspond à une valeur comprise entre 38 % et 45 % de la distance (a) entre la première extrémité et la seconde extrémité.

7. Rail profilé selon l'une quelconque des revendications précédentes,
**caractérisé en ce que**
dans la section transversale du rail profilé, en partant du point de bifurcation (4), chaque seconde suspente (5, 6) présente une première partie s'étendant en formant un premier angle aigu (α) par rapport à la première direction.

8. Rail profilé selon la revendication 7,
**caractérisé en ce que**
le premier angle est compris entre 20° et 80°.

9. Rail profilé selon l'une quelconque des revendications 7 et 8,
**caractérisé en ce que**
chaque seconde suspente (5, 6) présente une seconde partie d'extrémité (9, 10) inclinée en direction de la seconde extrémité et en direction d'une ligne de symétrie de la section transversale.

10. Rail profilé selon l'une quelconque des revendications précédentes,
**caractérisé en ce que**
chacune des secondes suspentes (5, 6) comporte une partie saillante latérale (11, 12) s'étendant dans une direction essentiellement perpendiculaire à la première direction et formant des moyens de couplage pour un chariot servant à insérer le fil de contact (200) dans les moyens de support.

11. Rail profilé selon la revendication 10,
**caractérisé en ce que**
chaque partie saillante latérale (11, 12) présente une extrémité libre, et la distance entre les extrémités libres des parties saillantes latérales correspond à une largeur de rail profilé maximum (c).

12. Rail profilé selon la revendication 11,
**caractérisé en ce que**
la largeur maximum (c) est comprise entre 9 et 11 cm.

13. Rail profilé selon l'une quelconque des revendications précédentes,
**caractérisé en ce que**
dans la section transversale du rail profilé, la partie (2) présente une extension dans la direction perpendiculaire à la première direction dont la grandeur correspond à une valeur comprise entre 40 % et 70 % de la grandeur de la distance (a) entre la première extrémité et la seconde extrémité.

14. Rail profilé selon l'une quelconque des revendications précédentes,
**caractérisé en ce que**
la partie (2) représente entre 15 % et 50 % du poids du rail profilé.

15. Rail profilé selon l'une quelconque des revendications précédentes,
**caractérisé en ce que**
la première suspente centrale (3) représente entre 5 % et 20 % du poids du rail profilé.

16. Rail profilé selon l'une quelconque des revendications précédentes,
**caractérisé en ce que**
la distance (a) entre la première extrémité et la seconde extrémité est comprise entre 10 et 25 cm.

17. Rail profilé selon la revendication 16,
**caractérisé en ce que**
la distance (a) entre la première extrémité et la seconde extrémité est comprise entre 14 et 16 cm.

18. Rail profilé selon l'une quelconque des revendications précédentes,
**caractérisé en ce qu'**
il comprend deux secondes suspentes (5, 6), et est configuré de manière à supporter un fil de contact (200), les extrémités libres (7, 8) des secondes suspentes (5, 6) étant configurées de manière à être introduites dans des encoches respectives du fil de contact et à le retenir en agissant comme des attaches.

19. Rail profilé selon l'une quelconque des revendications précédentes,
**caractérisé en ce que**
l'élément conducteur électrique est en métal.

20. Rail profilé selon la revendication 19,
**caractérisé en ce que**
le métal est l'aluminium.

21. Rail profilé selon l'une quelconque des revendications 1 à 18,
**caractérisé en ce que**
l'élément conducteur est composé d'une pluralité d'éléments de matières différentes.
